# EUROPEAN PATENT APPLICATION

(11) **EP 4 368 572 A1**
(43) Date of publication of application: **15.05.2024**
(21) Application number: 22837552.3
(22) Date of filing: 29.06.2022
(51) Int. Cl.: C01B 33/113, B01D 7/02

(54) **METHOD FOR MANUFACTURING SILICON MONOXIDE**

(30) Priority: 05.07.2021 JP 2021111718
(71) Applicant: SHIN-ETSU CHEMICAL CO., LTD., Tokyo 1000005 (JP)
(72) Inventor: OHASHI Ken, Tokyo 100-0005 (JP); TANAKA Shuji, Joetsu-shi, Niigata 942-8601 (JP); FUKUOKA Hirofumi, Annaka-shi, Gunma 379-0125 (JP)
(74) Representative: Sonnenhauser, Thomas Martin
(86) International application number: PCT/JP2022/025890
(87) International publication number: WO 2023/282136

(57) **Abstract**

The present invention is a method for producing silicon monoxide, including: an operation A for supplying, to a combustion device, a metal silicon powder or a mixture of a metal silicon powder and a silica powder serving as a raw material, using a first gas mixture containing an oxygen gas and an inert gas as a carrier; and an operation B for supplying a second gas mixture containing a flammable gas, an oxygen gas, and an inert gas to the combustion device to form a flame, and reacting a silicon component derived from the metal silicon powder and the oxygen gas in the flame to form a product; wherein the operation A and the operation B are performed simultaneously, and a ratio between an amount of the metal silicon powder supplied to the combustion device and a total amount of the oxygen gas contained in the first gas mixture and the oxygen gas contained in the second gas mixture is adjusted, to perform the reaction of the silicon component and the oxygen gas under a condition that a silicon monoxide powder is produced. Thus, a method for producing silicon monoxide with high productivity is provided.

## Description

### TECHNICAL FIELD

The present invention relates to a method for producing silicon monoxide.

### BACKGROUND ART

For producing silicon monoxide (hereinafter, also referred to as "SiO") in a conventionally well-known manner, a metal silicon powder (hereinafter, also referred to as "Si" or "Si powder") and a silica powder (hereinafter, also referred to as "SiO₂" or "SiO₂ powder") are bought into contact, thereby causing a reaction by maintaining the temperature at 1200°C or more, more specifically in the range around 1500°C, to sublimate SiO. Such a solid-phase reaction sublimation method has been known since long ago, and many patent applications have been filed (Patent Documents 1 to 7). Because there is no liquid phase of SiO, SiO is directly sublimated by a contact reaction between powders to become SiO gas, basically without passing through a liquid phase. The SiO gas is deposited onto a deposition plate or the like, cooled, and then solidified to become bulk SiO. For producing SiO gas, it is necessary to increase contact points between Si and SiO₂ powders. Fine powders are mixed with each other, granulated or made into a pressurized powder body in some way for increasing the contact points, thereby promoting the reaction. The reaction temperature is preferably high, but if it is too high, metal silicon Si is melted, and retention of the liquid is difficult. It is effective to strongly pressure the powders for increasing the contact points between the powders, but both Si and SiO₂ are ceramics and not deformable, and thus there is a limit. For increasing the contact points between the SiO₂ powder and Si powder, it is effective to finely pulverize the powders. However, for obtaining fine powders with a size of µm-order, for example, cost is required for a device and energy. Additionally, if the Si powder is excessively fine, the powder surface is easily oxidized, and a risk of dust explosion increases. Therefore, there is also a limit in pulverization. In the conventional solid phase contact method, there is a limit for increasing the reaction temperature or increasing the powder contact points. Thus, speed of producing SiO has been limited.

Meanwhile, it is known that when SiO₂ is reduced, metal silicon Si is produced via SiO (Non Patent Document 1). In a reduction furnace of SiO₂, for example, a reaction is thought to proceed in the order of elementary processes (1) to (3) as described below.

(1) SiO₂+C → SiO+CO

(2) SiO+C → Si+CO

(3) SiO₂+2C → Si+2CO

It is desirable to take out only SiO by stopping the reaction at the process (1) in carbon reduction of SiO₂. However, the processes (1) to (3) continuously occur in the reduction furnace, in which produced SiO gas is immediately subjected to the reaction of (2) in molten metal, and melt Si is produced. It is difficult to take out only SiO by stopping the reaction at the process (1). Although it is principally possible to take out SiO gas by inserting a high-temperature resistant pipe or the like to the reduction furnace in the process (1), such an attempt has never been carried out.

As described above, a more efficient production method of SiO than the conventional solid phase contact method has not been known.

Meanwhile, the prior art documents described below, for example, disclose methods of producing fine SiO₂, a composite oxide of fine SiO₂ and another oxide, and the like, by explosion combustion of Si and O₂ (Patent Documents 8 and 9). In Patent Document 9, for example, it is contrived that "a metal silicon powder is supplied to an air stream containing oxygen, and combusted, thereby forming a silicon dioxide powder having an average particle size of 0.01 to 10 um". Thus, a production method of fine SiO₂ powder is already known.

Production of SiO, and production of SiNₓ via SiO by an explosion combustion method are also disclosed (Patent Documents 10 and 11). However, the conditions are not specifically described, and details of the technologies are unclear. Patent Document 10 discloses production of SiO in a plasma jet, and such production is completely different from a production reaction in a flame containing O₂. Patent Document 11 discloses continuous production of SiO and SiNₓ, in which SiO is produced by oxidation in a flame and SiNₓ is subsequently produced by nitrization in the flame. It is not known whether only SiO can be taken out by the oxidation in a flame.

### CITATION LIST

### PATENT LITERATURE

Patent Document 1: JP 2001-220123 A
Patent Document 2: JP 2001-220122 A
Patent Document 3: JP 2001-220125 A
Patent Document 4: JP 2002-373653 A
Patent Document 5: JP H06-325765 A
Patent Document 6: JP 2015-149171 A
Patent Document 7: WO 2014/188851 A1
Patent Document 8: JP H03-170319 A
Patent Document 9: JP 2003-221218 A
Patent Document 10: JP H04-79975 B2
Patent Document 11: JP H05-36363 B2

### NON PATENT LITERATURE

Non Patent Document 1: Journal of the Japan Institute of Metals and Materials. 1988, 52(10), pp. 945-953

### SUMMARY OF INVENTION

### TECHNICAL PROBLEM

From the above prior art documents, it is already known that production of SiO₂ has been attempted with a controlled explosive oxidation reaction of a Si powder and an O₂ gas. However, it is not clear whether it is possible to produce SiO by a production method of the controlled explosive oxidation reaction. More specifically, because the explosive oxidation reaction occurs instantly, whether the reaction can be halted at a step in which SiO is produced has not been known. That is, information for production control of SiO has not been known so far.

The present invention was made in view of the above-mentioned problems, and has for its object to provide a method for producing silicon monoxide with high productivity, by controlling an O₂ concentration during an explosive combustion reaction.

### SOLUTION TO PROBLEM

For achieving the above object, the present invention provides a method for producing silicon monoxide (SiO) including, an operation A for supplying, to a combustion device, a metal silicon (Si) powder or a mixture of a metal silicon powder (Si) and a silica powder (SiO₂) serving as a raw material, using a first gas mixture containing an oxygen gas and an inert gas as a carrier; and an operation B for supplying a second gas mixture containing a flammable gas, an oxygen gas, and an inert gas to the combustion device to form a flame, and reacting a silicon (Si) component derived from the metal silicon (Si) powder and the oxygen gas in the flame to form a product; wherein the operation A and the operation B are performed simultaneously, and a ratio between an amount of the metal silicon (Si) powder supplied to the combustion device and a total amount of the oxygen gas contained in the first gas mixture and the oxygen gas contained in the second gas mixture is adjusted, to perform the reaction of the silicon (Si) component and the oxygen gas under a condition that a silicon monoxide (SiO) powder is produced.

According to such a method for producing SiO, a SiO powder can be efficiently produced by an oxidation reaction of the Si powder or the mixture of the Si powder and SiO₂ powder in an air stream. In such oxidation reaction, the SiO powder can be produced with very high productivity compared with the conventional solid phase contact reaction method.

At this time, it is possible to perform an operation C for supplying, to the combustion device, a third gas mixture containing an oxygen gas and an inert gas, or an inert gas, for controlling oxygen diffusion to the metal silicon (Si) powder or the mixture of the metal silicon (Si) powder and the silica (SiO₂) powder, wherein the operation B and the operation C may be performed simultaneously.

As described above, by using the gas for controlling oxygen diffusion to the Si powder or the mixture of the Si powder and SiO₂ powder, the production of SiO powder can be controlled with higher accuracy.

In the inventive method for producing SiO, the flammable gas contained in the second gas mixture may include hydrocarbon.

Further, the flammable gas contained in the second gas mixture may include hydrogen.

These components may be used as the flammable gas used in the inventive method for producing SiO. The ratio of these components may be adjusted appropriately.

Further, in the inventive method for producing SiO, SiO contained in the product can be sublimated and extracted by heating the product at a temperature of 1100°C or more and 1500°C or less.

In a case where unreacted Si, which is a component other than SiO, or a mixture with silicon dioxide (SiO₂) is obtained by the inventive method for producing SiO, only the SiO component can be sublimated and extracted by such a method. This is because the temperature at which Si or SiO₂ evaporates is far higher than that of SiO.

### ADVANTAGEOUS EFFECTS OF INVENTION

By the inventive method for producing SiO, a SiO powder can be efficiently produced by the oxidation reaction of the Si powder or the mixture of the Si powder and SiO₂ powder in an air stream. In such oxidation reaction, the SiO powder can be produced with very high productivity compared with the conventional solid phase contact reaction method. SiO produced by the inventive production method of SiO can be used as an anode material for lithium-ion secondary battery, in addition to glass, plastic coating, or other applications. Moreover, such an anode material can be widely used as a high-capacity anode material in mobile devices such as a smart phone or smart watch and a battery for electric automobiles.

### BRIEF DESCRIPTION OF DRAWINGS

FIG. 1 is a schematic sectional view showing an example of a combustion device that can be used in the inventive method for producing SiO;
FIG. 2 is a schematic sectional view showing another example of the combustion device that can be used in the inventive method for producing SiO;
FIG. 3 is a schematic sectional view showing still another example of the combustion device that can be used in the inventive method for producing SiO; and
FIG. 4 is a binary phase diagram of Si-O.

### DESCRIPTION OF EMBODIMENTS

Hereinafter, embodiments of the present invention will be described, but the present invention is not limited thereto.

As described above, efficient production of SiO has been limited in the conventional solid phase contact method. For improving the performance of a lithium-ion secondary battery in the future, SiO is a very important anode material and is expanding its application. Therefore, it has been desired to develop an efficient production method of SiO, and to produce SiO in which low degree of disproportionation is maintained.

Although it is already known from the above prior art documents that production of SiO₂ has been attempted with an explosive oxidation reaction of a Si powder and an O₂ gas, it is not clear whether SiO can be produced by a production method of the explosive oxidation reaction. More specifically, because the explosive oxidation reaction occurs instantly, whether the reaction can be halted at the step in which SiO is produced has not been known. Moreover, it is not known whether it is possible to produce SiO that is suitable as an anode of lithium-ion secondary battery (hereinafter, referred to as LIB). Based on such background of prior art, the present invention was made by investigating a production method of SiO material so as to obtain, in particular, material properties suitable for anode material application in batteries (SiO with low degree of disproportionation).

The present invention is a method for producing silicon monoxide (SiO), including an operation A for supplying, to a combustion device, a metal silicon (Si) powder or a mixture of a metal silicon (Si) powder and a silica powder (SiO₂) serving as a raw material, using a first gas mixture containing an oxygen gas and an inert gas as a carrier; and an operation B for supplying a second gas mixture containing a flammable gas, an oxygen gas, and an inert gas to the combustion device to form a flame, and reacting a silicon (Si) component derived from the metal silicon (Si) powder and the oxygen gas in the flame, or by the silicon (Si) component, silica (SiO₂) and oxygen derived from the oxygen gas, to form a product; wherein the operation A and the operation B are performed simultaneously, and a ratio between an amount of the metal silicon (Si) powder or the mixture of the metal silicon (Si) powder and the silica(SiO₂) powder supplied to the combustion device and a total amount of the oxygen gas contained in the first gas mixture and the oxygen gas contained in the second gas mixture is adjusted, to perform the reaction of the silicon (Si) component and the oxygen gas under a condition that a silicon monoxide (SiO) powder is produced. When using the mixture of the metal silicon (Si) powder and the silica (SiO₂) powder, oxygen is supplied also from SiO₂, and thus an amount of the oxygen gas contained in the first and second gas mixtures may be small, allowing more accurate adjustment of the oxygen gas amount.

The method may further include the operation C for supplying, to the combustion device, the third gas mixture containing an oxygen gas and an inert gas, or an inert gas, for controlling oxygen diffusion to the metal silicon (Si) powder or the mixture of the metal silicon (Si) powder and the silica (SiO₂) powder, wherein the operation B and the operation C may be performed simultaneously.

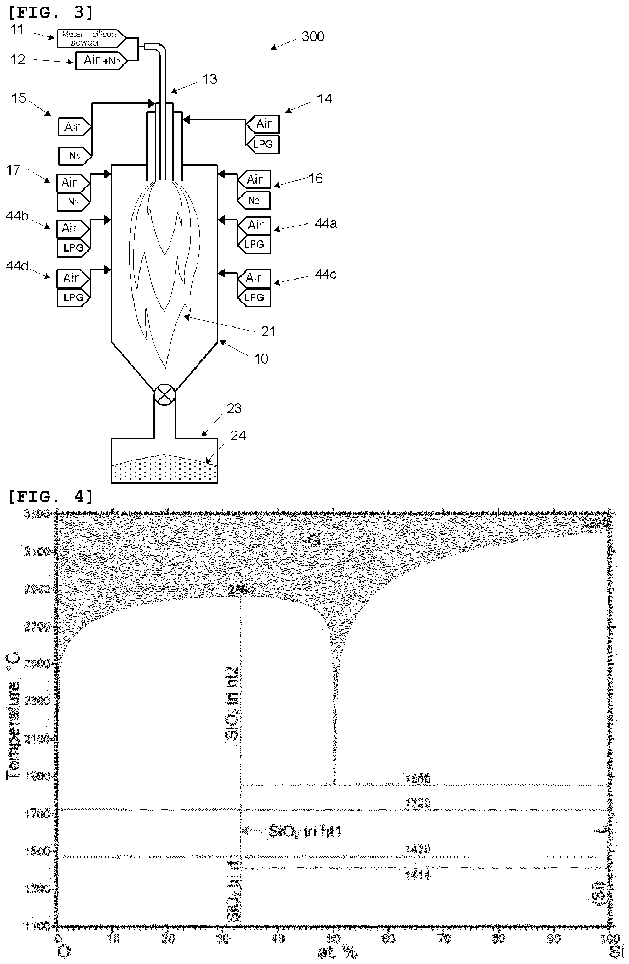

Fig. 4 shows a binary phase diagram of Si-O. At the point where Si:O = 1:1, gas phase SiO reaches down to 1,860°C. For producing gas phase SiO₂, it is necessary to raise the temperature exceeding 2,860°C. As compared with that, the temperature may be 1,000°C lower for producing the gas phase SiO. This temperature (1,860°C) is the lower limit for producing the gas phase SiO. Accordingly, it is sufficient to raise the temperature to 1,860°C or more in an oxidation atmosphere. When the raw material is the mixture of Si powder and SiO₂ powder, contact sublimation reaction between the powders in the original solid phase occurs well at 1,300°C or more. Although Si and SiO₂ have different vapor pressures, regardless of whether in the form of droplet or vapor gas, the reaction occurs well in a temperature field heated to 1,860°C or more, as in the present invention. Then, SiO is formed.

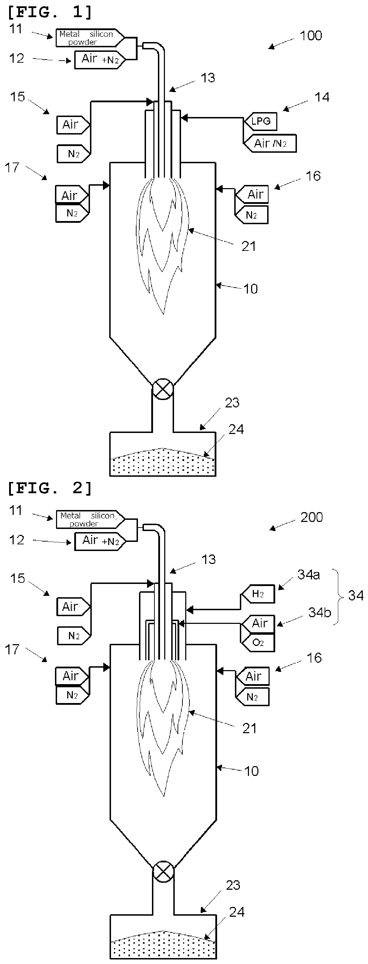

FIG. 1 shows an example of the combustion device (combustion reaction device) that is important for realizing the inventive method for producing SiO. Needless to say, the combustion reaction device is not limited to the one shown in FIG. 1. A device capable of controlling a flame and combustion oxidation can perform the inventive method for producing SiO.

A production device of SiO (combustion device) 100 has a combustion container 10. The combustion container 10 is connected with a supply means 11 for supplying the Si powder or the mixture of the Si powder and SiO₂ powder (shown as a Si powder supply means) and a first gas supply means 12 for supplying the first gas mixture containing an oxygen gas and an inert gas, via a burner 13. FIG. 1 shows a case where the first gas supply means 12 supplies the first gas mixture obtained by adding a nitrogen gas (N₂ gas) to air. In this case, a flow rate of the inert gas is adjusted by nitrogen and argon contained in air, and the added nitrogen gas. By these constituent elements, the Si powder or the mixture of the Si powder and SiO₂ powder serving as a raw material is supplied to the combustion device 100 (inside the combustion container 10 of the combustion device 100) using the first gas mixture containing an oxygen gas and an inert gas as a carrier.

The combustion device 100 further includes a second gas supply means 14 for supplying the second gas mixture containing a flammable gas, an oxygen gas, and an inert gas to the combustion device 100 (inside the combustion container 10 of the combustion device 100). FIG. 1 shows a case where the second gas supply means 14 supplies LPG, air, and an additional nitrogen gas.

The combustion device 100 may further include a third gas supply means for supplying the third gas mixture containing an oxygen gas and an inert gas, or an inert gas, for controlling oxygen diffusion to the Si powder, to the combustion device 100 (inside the combustion container 10 of the combustion device 100). FIG. 1 shows a case where a third gas supply means 15 supplies a mixture of air and an additional nitrogen gas.

The combustion device 100 may further include protect gas supply means 16 and 17 for supplying protect gases for the purpose of reducing radiant heat to a furnace wall, or the like. FIG. 1 shows a case where the third gas supply means 16 and 17 supply mixtures of air and an additional nitrogen gas.

The combustion device 100 further includes a collecting chamber 23 for collecting a produced SiO powder 24 at a lower part.

In the present invention, SiO can be produced by using such combustion device 100. That is, from the upper center part of the combustion device 100, by the supply means 11 for supplying the Si powder or the mixture of the Si powder and SiO₂ powder, and by the first gas supply means 12, the Si powder or the mixture of the Si powder and SiO₂ powder is supplied together with the air stream of a carrier gas composed of the first gas mixture (air and additional nitrogen gas in the example shown in FIG. 1) (operation A). At this time, the Si powder or the mixture of the Si powder and SiO₂ powder may have a size of, for example, approximately #200 mesh. The second gas mixture (flammable gas composed of LPG, air, and additional nitrogen gas in the example shown in FIG. 1) is supplied from the concentric outer periphery of the supply means 11 and 12. Along with these supplies, a tip of the burner 13 ignites to form a flame 21. In the flame 21, while the Si powder is oxidized, or the mixture of the Si powder and SiO₂ powder is reacted, shortage of oxygen is supplemented with oxygen gas for conducting oxidation. Then, produced SiO gas is quenched and solidified at a lower part of the device to produce the SiO powder (operation B). Regarding the ratio between the Si powder and SiO₂ powder in the mixture, Si-rich is preferable, and desirably in the range about 1.5<Si/SiO₂<3. Depending on an amount of the Si powder or the mixture of the Si powder and SiO₂ powder supplied, the third gas mixture containing an oxygen gas and an inert gas (air and additional nitrogen gas in the example shown in FIG. 1) is supplied as necessary (operation C). These operations A and B are simultaneously performed, or the operations A to C are simultaneously performed. Thereby, production speed of SiO powder and flame control are both successfully achieved to stably produce the SiO powder.

In the inventive method for producing SiO, the operation B, in which the second gas mixture containing a flammable gas, an oxygen gas (combustion supporting O₂ gas), and an inert gas is supplied to the combustion device to form a flame, is a main heat generation source for oxidizing the Si powder or the mixture of the Si powder and SiO₂ powder. Along with the operation B, the operation A, in which the Si powder (Si fine powder) or the mixture of the Si powder and SiO₂ powder serving as a raw material is supplied to the combustion device using the first gas mixture containing an oxygen gas (combustion supporting O₂ gas) and an inert gas as a carrier, is also performed in the same combustion device. While heat generated by oxidation of the Si powder or the mixture of the Si powder and SiO₂ powder with the oxygen gas is also added, the temperature is raised to the SiO gas temperature region described above, thereby producing SiO.

### Operation A

In the operation A, the reason why using the gas mixture (first gas mixture) containing an inert gas other than the combustion supporting O₂ gas as a carrier is to control the oxidation reaction of the Si powder or the mixture of the Si powder and SiO₂ powder. If the carrier gas only contains a combustion supporting O₂ gas, the explosive oxidation reaction may instantly occur to produce SiO₂. Therefore, by using the gas mixture containing the combustion supporting O₂ gas and an inert gas, speed of oxidative heat generation reaction is controlled by reducing the O₂ concentration, thereby facilitating production of SiO. For stopping the reaction at the step in which SiO is produced before production of SiO₂, the O₂ concentration is required not exceeding the explosion limit oxygen concentration of 10%. It is desirable to use, as the first gas mixture, a gas mixture of O₂ and N₂, or a gas mixture of O₂ and Ar, in which an amount ratio of the components is controlled.

### Operation B

As described above, the operation B is an operation for supplying the gas mixture (second gas mixture) containing a flammable gas, an oxygen gas (combustion supporting O₂ gas), and an inert gas, to form a flame. This operation is a main heat supply process for producing SiO from Si or the mixture of Si and SiO₂. In a case where air is used as the gas mixture (first gas mixture) in the operation A, O₂ for producing SiO is insufficient. In such case, a quantity of heat is adjusted by the gas mixture (second gas mixture) containing a flammable gas and an oxygen gas (combustion supporting O₂ gas) in the operation B. Furthermore, in the operation B, an inert gas is also added for adjusting and controlling the production speed of SiO similarly as in the operation A. The inert gas used herein may be, for example, nitrogen or argon contained in air.

The flammable gas may be a hydrocarbon gas such as CH₄ and liquefied natural gas (LPG). Needless to say, the hydrocarbon gas is not limited thereto. Hydrocarbons such as methane, ethane, propane, acetylene, and propylene are preferred because sufficient combustion heat generation can be obtained, but are not limited thereto. The flammable gas may be hydrogen (hereinafter, referred to as H₂) or a gas mixture containing H₂ and hydrocarbon. The ratio and the like may be determined such that a quantity of heat generation in the flame, or a shape of the flame such as flame length may be adopted to produce SiO. The operation B is an essential process for forming a flame, and causing the reaction of the Si powder or the mixture of Si and SiO₂ with the O₂ gas in the flame, to form SiO. In the operation B, the size of the flame is made as big and long as possible, thereby oxidizing the Si component as slow as possible in the flame while performing control, to produce SiO. It is an essential requirement of the present invention to perform the reaction of the Si component and oxygen gas under the condition that SiO powder is produced. That is, it is necessary to cause the oxidation reaction by controlling the O₂ concentration in the flame within the range that SiO is produced. The control of oxidation reaction is performed by, in particular, adjusting the ratio between an amount of the Si powder or the mixture of Si and SiO₂ supplied to the combustion device and an amount of the oxygen gas (total amount of oxygen gas contained in the first gas mixture and oxygen gas contained in the second gas mixture). Moreover, it is preferable to perform the control of oxidation reaction by optimizing a mixing ratio or type of the flammable gas (hydrocarbon gas, H₂, and the like) and a mixing ratio of the flammable gas, oxygen gas (combustion supporting gas), and inert gas. That is, an adequate amount of O₂ in the flame changes depending on the amount of Si supplied, the type and flow rate of the flammable gas, or the like. Thus, adjustment of these production conditions may be performed experimentally.

### Operation C

As described above, it is necessary to optimize the gas ratio of the second gas mixture in the operation B depending on the amount of the Si powder or the mixture of Si and SiO₂ supplied. However, the optimal gas ratio and optimal flame may not be achieved simultaneously. More specifically, the optimization of flame is to lengthen the flame as long as possible. In the present invention, SiO is produced by dropping the Si powder or the mixture of Si and SiO₂ in the flame while controlling the oxidation. However, the length of flame, temperature distribution, and control of the oxygen amount may not be optimized simultaneously. In such case, by the operation C, in which O₂/inert gas or inert gas is supplied for controlling oxygen diffusion to the Si powder or the mixture of Si and SiO₂, oxidation speed in the operation B can be controlled. Specifically, the inventive method for producing SiO may further include the operation C for supplying, to the combustion device, the third gas mixture containing an oxygen gas and an inert gas, or an inert gas, for controlling oxygen diffusion to the SiO powder or the mixture of Si and SiO₂. When the amount of the Si powder or the mixture of Si and SiO₂ supplied is small, naturally, the amount of O₂ required may be small. In that case, if the amount of combustion supporting O₂ gas is reduced in the operation B, the flame cannot be optimized. Thus, in the operation B, the flame is maintained by adjusting the gas mixture within the adjustable range. And in the operation C, the gas mixture, in which the ratio between the O₂ gas and inert gas is adjusted such that the O₂ gas is less (amount of O₂ gas is smaller) than the inert gas, is supplied. When the amount of the Si powder or the mixture of Si and SiO₂ supplied is large, conversely, the ratio between the O₂ gas and inert gas is adjusted such that the O₂ gas is richer (amount of O₂ gas is larger) than the inert gas.

The supply of the protect gas from the protect gas supply means 16 and 17 is also a part of the operation C for supplying the third gas mixture containing an oxygen gas and an inert gas, or an inert gas, for controlling oxygen diffusion to the SiO powder.

According to the present invention, SiO can be efficiently produced by the oxidation reaction of Si in an air stream. Such oxidation reaction can produce SiO with very high productivity compared with the conventional solid phase contact reaction method. In particular, a SiO anode material with low degree of disproportionation can be efficiently produced. Thus, the SiO material suitable as an anode material for lithium-ion battery (LIB) can be obtained. SiO produced by the inventive production method can be used as an anode material for lithium-ion secondary battery, in addition to glass, plastic coating, or other applications. Furthermore, the obtained SiO can be widely used as a high-capacity anode material in mobile devices such as a smart phone or smart watch and a battery for electric automobiles.

According to the inventive method for producing silicon monoxide, SiO can be produced with high productivity by the above-mentioned method. However, there is a case that unreacted Si, which is a component other than SiO, or a mixture with SiO₂ is obtained as a product, depending on the conditions. In such cases, SiO contained in the product can be sublimated and extracted by heating the product at a temperature of 1100°C or more and 1500°C or less. The temperature at which Si or SiO₂ evaporates is far higher than that of SiO. Therefore, only the SiO component can be sublimated and extracted by such a method.

### EXAMPLE

Hereinafter, the present invention will be more specifically described with reference to Examples and Comparative Examples of the present invention. However, the present invention is not limited to these Examples.

### Example 1

Using the combustion device (combustion reaction device) 100 shown in FIG. 1, SiO was produced in accordance with the inventive production method. LPG was used as the flammable gas in the operation B. Air was used for the O₂ gas and inert gas, and air was also used as the third gas mixture in the operation C (i.e., gas mixture containing oxygen gas, and containing nitrogen and argon as the inert gas) .

From the Si powder supply means 11, Si powder was supplied at a rate of 2.5 kg/hr. The Si powder was supplied together with the flow of a carrier gas (O₂ concentration of around 10 Vol%) containing air and additional N₂ gas, which was supplied at a rate of 1.5 m³/hr from the first gas supply means 12 (operation A). The mixture was ignited with the burner 13.

Air was supplied from the third gas supply means 15 (in this Example, additional N₂ was not supplied) at a rate of 2.0 Nm³/hr (operation C). In addition, from the second gas supply means (burner) 14 in the outer periphery thereof, the second gas mixture (1.0 Nm³/hr of LPG gas and 25 Nm³/hr of air) was mixed and combusted (operation B).

By the above operations A, B, and C, SiO powder was produced while controlling an amount of O₂ in the combustion flame 21.

In the combustion container 10, for controlling the flame and air flow in the furnace, and for reducing radiant heat to the furnace wall, an adequate amount of air flow curtain composed of air and additional N₂ gas was made to flow from the protect gas supply means 16 and 17. This operation is a part of the operation C for controlling the flame by changing the ratio between air and N₂. By this operation, the oxygen concentration in the furnace was controlled.

In this Example, 100 % of the SiO powder 24 produced in the collecting chamber 23 was collected. An inner pressure of the furnace was maintained under reduced pressure from 0 to 2,000 Pa. By the powder XRD image, the produced SiO powder 24 was confirmed to be amorphous.

### Example 2

A mixture of Si and SiO₂ (ratio 2:1) serving as a raw material was supplied from the supply means 11 at a rate of 2.5 kg/hr. The powder was supplied together with the flow of a carrier gas (O₂ concentration of around 7 Vol%) containing air and additional N₂ gas, which was supplied at a rate of 1.5 m³/hr from the first gas supply means 12 (operation A). Other than this procedure, the same operations A, B, and C as in Example 1 were performed to produce SiO powder while controlling an amount of O₂ in the combustion flame 21. By the powder XRD image, the SiO powder produced in this Example was confirmed to be amorphous.

### Example 3

SiO was produced by using a production device of SiO 200 shown in FIG. 2. The configuration of the production device of SiO 200 shown in FIG. 2 is basically the same as that of FIG. 1. A different point is that a gas mixture (second gas mixture) containing H₂ gas, air, and additional oxygen gas (O₂ gas) is supplied from a second gas supply means 34. The other constituent elements with the same reference numbers as in FIG. 1 are the same as those in FIG. 1. In the operation B, in place of hydrocarbon gas (LPG), which was the flammable gas in Example 1, H₂ gas was supplied as a main heat generation source from a hydrogen gas supply means 34a. The operation B controls mainly the flame, and the configuration of the device 200 is such that air and additional oxygen gas (O₂ gas) can be introduced from an air and oxygen gas supply means 34b while being mixed with the above H₂ (however, in this Example, amount of air introduced is made zero by adjustment as described below). By this configuration, the amount of oxygen in the flame was adjusted.

In this Example, air and N₂ were used as the protect gas to further adjust and control the amount of oxygen in the tank (combustion container 10).

The amount of Si powder supplied from the Si powder supply means 11 was the same as in Example 1, 2.5 kg/hr. The amount of carrier gas to accompany the powder was also the same as in Example 1. Further, 8 Nm³/hr of H₂ gas was introduced from the hydrogen gas supply means 34a, and 5 Nm³/hr of O₂ gas (in this Example, air was 0%) was also introduced from the air and oxygen gas supply means 34b by a nozzle at an initial rate up to 100 m/sec from a coaxial burner, thereby forming H₂/O₂ hydrolysis flame. As the protect gas in the operation C, N₂ gas with O₂ concentration of 5% was made to flow at a rate of 0.1 to 5 Nm³/hr for adjusting the amount of oxygen in the tank (combustion container 10). The produced SiO powder was similarly collected in the collecting chamber 23, and the properties were investigated. The obtained SiO powder was subjected to XRD measurement, and as a result, a Si peak was not observed, and the powder was confirmed to be amorphous with only broad reflection.

### Example 4

SiO was produced by using a production device of SiO 300 shown in FIG. 3. The production device of SiO 300 is a flame reaction device with multiple burner configuration, in which size of the flame 21 formed in the operation B is made long so that the production reaction of SiO in the flame is carried out mildly for a long time in a controlled manner.

The basic configuration of the combustion reaction device of this Example is the same as those of Examples 1 and 2. A second gas supply means (burner device) for the operation B is placed at the top of the furnace, and further the combustion container 10 at a lower part is sequentially provided with a plurality of second gas supply means (burner devices) 44a, 44b, 44c, and 44d. The zone for reaction to produce SiO is lengthened, and while controlling the amount of oxygen, the reaction is caused. Needless to say, the arrangement of the lower burners of the present invention is not limited to the device shown in FIG. 3. The conditions of the operation A were the same as those in Examples 1 and 2. Gas conditions of the operation B was selected such that LPG was in the range of 0.5 to 1.0 Nm³/hr, and the second gas mixture (air) was in the range of 12 to 24 Nm³/hr, for providing optimal condition to produce SiO. The produced SiO powder was subjected to XRD measurement, and as a result, a Si peak was not observed, and the powder was confirmed to be amorphous with only broad reflection as in Examples 1 and 2. The reaction product was analyzed, and it was found that 95% or more of the product was SiO. The remaining part was unreacted Si powder and SiO₂ powder.

### Comparative Example 1

In the device shown in FIG. 1 used in Examples 1 and 2, from the third gas supply means 15 for the operation C, oxygen gas (100% oxygen) was supplied. The flame 21 became oxygen-rich, the flame temperature also increased, and the ratio that the reaction did not stop at the step in which SiO was produced increased. The obtained product was subjected to XRD analysis, and the result showed that the almost part was SiO₂ powder.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. A method for producing silicon monoxide, comprising:
an operation A for supplying, to a combustion device, a metal silicon powder or a mixture of a metal silicon powder and a silica powder serving as a raw material, using a first gas mixture containing an oxygen gas and an inert gas as a carrier; and
an operation B for supplying a second gas mixture containing a flammable gas, an oxygen gas, and an inert gas to the combustion device to form a flame, and reacting a silicon component derived from the metal silicon powder and the oxygen gas in the flame to form a product; wherein
the operation A and the operation B are performed simultaneously, and
a ratio between an amount of the metal silicon powder supplied to the combustion device and a total amount of the oxygen gas contained in the first gas mixture and the oxygen gas contained in the second gas mixture is adjusted, to perform the reaction of the silicon component and the oxygen gas under a condition that a silicon monoxide powder is produced.

2. The method for producing silicon monoxide according to claim 1, further comprising:
an operation C for supplying, to the combustion device, a third gas mixture containing an oxygen gas and an inert gas, or an inert gas, for controlling oxygen diffusion to the metal silicon powder or the mixture of the metal silicon powder and the silica powder, wherein
the operation B and the operation C are performed simultaneously.

3. The method for producing silicon monoxide according to claim 1 or 2, wherein
the flammable gas contained in the second gas mixture comprises hydrocarbon.

4. The method for producing silicon monoxide according to any one of claims 1 to 3, wherein
the flammable gas contained in the second gas mixture comprises hydrogen.

5. The method for producing silicon monoxide according to any one of claims 1 to 4, comprising
heating the product at a temperature of 1100°C or more and 1500°C or less to sublimate and extract silicon monoxide contained in the product.
